(19) Europäisches Patentamt
European Patent Office
Office européen des brevets

(11) **EP 2 804 175 A1**

(12) **DEMANDE DE BREVET EUROPEEN**

(43) Date de publication:
**19.11.2014 Bulletin 2014/47**

(51) Int Cl.:
*G10L 15/25* $^{(2013.01)}$     *G06K 9/00* $^{(2006.01)}$

(21) Numéro de dépôt: **14167786.4**

(22) Date de dépôt: **09.05.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **15.05.2013 FR 1354335**

(71) Demandeur: **Parrot**
**75010 Paris (FR)**

(72) Inventeurs:
• **Benhaim, Eric**
  **95120 ERMONT (FR)**
• **Sahbi, Hichem**
  **75013 PARIS (FR)**

(74) Mandataire: **Dupuis-Latour, Dominique**
**Bardehle Pagenberg**
**10, boulevard Haussmann**
**75009 Paris (FR)**

(54) **Procédé de reconnaissance vocale visuelle par suivi des déformations locales d'un ensemble de points d'intérêt de la bouche du locuteur**

(57) Ce procédé comprend des étapes de : a) pour chaque point d'intérêt de chaque image, calcul d'un descripteur local de gradient et d'un descripteur local de mouvement ; b) constitution de microstructures de *n* points d'intérêt, définies chacune par un tuple d'ordre d'ordre $n \geq 1$ ; c) détermination, pour chaque tuple d'un vecteur de caractéristiques visuelles structurées ($d_0$ ... $d_3$ ...) à partir des descripteurs locaux ; d) pour chaque tuple, map-page de ce vecteur par un algorithme de classification sélectionnant un *codeword* unique parmi un ensemble de *codewords* formant *code-book* (CB) ; e) génération d'une série temporelle ordonnée des *codewords* ($a_0$ ... $a_3$ ...) pour les images successives de la séquence video ; et f) mesure, au moyen d'une fonction de type *string kernel,* de la similarité de la série temporelle de *codewords* avec une autre série temporelle de *codewords* issue d'un autre locuteur.

*Fig. 5*

**Description**

L'invention concerne la reconnaissance de l'activité vocale visuelle ou VSR *(Visual Speech Recognition),* technique dite également "lecture sur les lèvres", consistant à opérer la reconnaissance automatique du langage parlé par analyse d'une séquence video formée d'une succession d'images de la région de la bouche d'un locuteur.

La région d'étude, ci-après "région de la bouche", comprend les lèvres et leur voisinage immédiat, et peut être éventuellement étendue pour couvrir une zone plus large du visage, incluant par exemple la mâchoire et les joues.

Une application possible de cette technique, bien entendu non limitative, est la reconnaissance vocale par des systèmes de téléphonie "mains libres" utilisés dans un environnement très bruyant tel que celui de l'habitacle d'un véhicule automobile.

Cette difficulté liée au bruit environnant est particulièrement contraignante dans cette application, du fait de la distance importante entre le micro (placé au niveau de la planche de bord ou dans un angle supérieur du pavillon de l'habitacle) et le locuteur (dont l'éloignement est contraint par la position de conduite), ce qui entraine la captation d'un niveau de bruit relativement élevé et par voie de conséquence une extraction difficile du signal utile noyé dans le bruit. De plus, le milieu très bruité typique de l'environnement automobile présente des caractéristiques qui évoluent de manière imprévisible en fonction des conditions de conduite (passage sur des chaussées déformées ou pavées, autoradio en fonctionnement, etc.) très complexes à prendre en compte par les algorithmes de débruitage basés sur l'analyse du signal recueilli par un micro.

Le besoin existe de ce fait de disposer de systèmes permettant de reconnaitre avec un degré élevé de certitude par exemple les chiffres d'un numéro de téléphone énoncés par le locuteur, dans des circonstances où la reconnaissance par des moyens acoustiques ne peut plus être mise en oeuvre convenablement du fait d'un rapport signal/bruit trop dégradé. De plus, on a pu constater que des sons tels que /b/, /v/, /n/ ou /m/ portent souvent à confusion dans le domaine audio, alors qu'il n'y a pas d'ambigüité dans le domaine visuel, de sorte que l'association de moyens de reconnaissance acoustique et de moyens de reconnaissance visuelle peut être de nature à procurer une amélioration substantielle des performances dans les environnements bruités où les systèmes uniquement audio conventionnels manquent de robustesse.

Toutefois, les performances des systèmes automatiques de lecture sur les lèvres qui ont pu être proposés jusqu'à présent restent insuffisantes, avec une difficulté majeure résidant dans l'extraction de caractéristiques visuelles réellement pertinentes pour discriminer les différents mots ou fractions de mots énoncés par le locuteur. De plus, la variabilité inhérente entre locuteurs qui existe dans l'apparence et le mouvement des lèvres rend les performances des systèmes actuels très mauvaises.

Par ailleurs, les systèmes de reconnaissance de l'activité vocale visuelle proposés jusqu'à présent mettent en oeuvre des techniques d'intelligence artificielle nécessitant de très importants moyens logiciels et matériels, difficilement envisageables dans le cadre de produits de très grande diffusion avec des contraintes de cout très strictes, qu'il s'agisse d'équipements incorporés au véhicule ou bien d'accessoires en forme de boitier amovible intégrant tous les composants et fonctions de traitement du signal pour la communication téléphonique.

Il subsiste donc un besoin réel de disposer d'algorithmes de reconnaissance vocale visuelle à la fois robustes et économes en ressources de calcul pour leur mise en oeuvre, surtout lorsqu'il s'agit de pouvoir exécuter cette reconnaissance vocale "à la volée", quasiment en temps réel. L'article de Ju et al. "Speaker Dependent Visual Speech Recognition by Symbol and Rear Value Assignment", Robot Intelligence Technology and Applications 2012 Advances in Intelligent Systems and Computing, Springer, pp 1015-1022, Jan. 2013, pp. 1015-1022 décrit un tel algorithme de reconnaissance automatique du langage par analyse VSR d'une séquence video, mais dont concrètement l'efficacité reste limitée, dans la mesure où il ne combine pas les caractéristiques vocales visuelles locales avec les relations spatiales entre points d'intérêt.

D'autres aspects de ces algorithmes sont développés dans les articles suivants :

- Navneet et al. "Human Detection Using Oriented Histograms of Flow and Appearance", Proceedings of the European Conference on Computer Vision, Springer, pp. 428-441, May 2006 ;
- Sivic et al. "Video Google: A Text Retrieval Approach to Object Matching in Videos", Proceedings of the 8th IEEE International Conference on Computer Vision , pp. 1470-1477, Oct. 2003 ;
- Zheng et al. "Effective and efficient Object-based Image Retrieval Using Visual Phrases", Proceedings of the 14th Annual ACM International Conference on Multimedia, pp. 77-80, Jan. 2006 ;
- Zavesky "LipActs: Efficient Representations for Visual Speakers", 2011 IEEE International Conference on Multimedia and Expo, pp.1-4; July 2011 ;
- Yao et al. "Grouplet: A structured image Representation for Recognising Human and Object Interactions", 2010 IEEE Conference on Computer Vision and Pattern Recognition, pp. 9-16, June 2010 ;
- Zhang et al. "Generating Descriptive Visual Words and Visual Phrases for Large-Scale Image Applications", IEEE Transactions on Image Processing, Vol. 20, No. 9, pp 2664-2667, Sept. 2011 ;
- Zheng et al. "Visual Synset: Towards a Higher-Level Visual representation", 2008 IEEE Conference on Computer Vision and Pattern Recognition, pp. 9-16, June 2008.

Le but de l'invention est d'apporter aux techniques existantes de reconnaissance vocale visuelle un certain nombre d'améliorations et de simplifications dans le traitement, permettant à la fois d'en améliorer les performances d'ensemble (notamment avec une robustesse accrue et une moindre variabilité entre locuteurs) et de réduire la complexité du calcul pour rendre la reconnaissance compatible avec les moyens existants dans des équipements de grande diffusion.

Selon *un premier aspect,* l'invention propose un nouveau concept de caractéristiques visuelles structurées.

Il s'agit de caractéristiques portant sur la manière de décrire le voisinage d'un point choisi sur l'image de la bouche du locuteur, ci-après désigné "point d'intérêt" (notion également connue sous la désignation de *"landmark"* ou de "point de repère"). Ces caractéristiques structurées (également connues sous la désignation de *features* dans la communauté scientifique) sont généralement décrites par des vecteurs de caractéristiques *("feature vector")* de grande dimension, complexes à traiter. L'invention propose d'appliquer à ces vecteurs une transformation permettant à la fois d'en simplifier l'expression et d'encoder efficacement la variabilité induite par le langage visuel, rendant possible une analyse beaucoup plus simple, et tout aussi efficace, sans perte d'information critique et en conservant la cohérence temporelle de la parole.

Selon *un second aspect,* complémentaire du précédent, l'invention propose une nouvelle procédure d'entrainement basée sur une stratégie particulière de combinaison des caractéristiques structurées. Il s'agit de constituer des ensembles d'un ou plusieurs points d'intérêt regroupés en "tuples", un tuple pouvant être un singleton (tuple d'ordre 1), une paire (tuple d'ordre 2), un triplet (tuple d'ordre 3), etc. L'apprentissage consistera à extraire parmi tous les tuples possibles d'ordre 1 à N (N étant généralement limité à N = 3 ou N = 4) une sélection des tuples les plus pertinents, et à exécuter la reconnaissance vocale visuelle sur ce sous-ensemble réduit de tuples.

Pour la construction des tuples, l'invention propose de mettre en oeuvre un principe d'agrégation en partant de singletons (points d'intérêt isolés) auxquels sont associés d'autres singletons pour former des paires qui feront ensuite l'objet d'une première sélection des tuples les plus pertinents, en particulier guidée par la maximisation des performances d'une machine à vecteurs de supports (SVM) via un apprentissage multi-noyaux MKL *(Multi-Kernel Learning)* pour combiner les tuples et leurs caractéristiques associées.

L'agrégation se poursuit par association de singletons à ces paires sélectionnées, pour former des triplets qui feront eux-mêmes l'objet d'une sélection, et ainsi de suite. À chaque groupe de tuples d'ordre supérieur nouvellement créé est appliqué un critère de sélection permettant de ne retenir parmi ceux-ci que les tuples les plus performants au sens de la reconnaissance vocale visuelle, c'est-à-dire, concrètement, ceux qui présentent les déformations les plus importantes au fil des images successives de la séquence video (en partant de l'hypothèse que les tuples qui bougent le plus seront les plus discriminants pour la reconnaissance vocale visuelle).

Plus précisément, selon le *premier aspect* précité, l'invention propose un procédé comprenant les étapes suivantes :

a) pour chaque point d'intérêt de chaque image, calcul :

- d'un descripteur local de gradient, fonction d'une estimation de la distribution des gradients orientés, et
- d'un descripteur local de mouvement, fonction d'une estimation des flots optiques orientés entre images successives,

lesdits descripteurs étant calculés entre images successives dans le voisinage du point d'intérêt considéré ;
b) constitution de microstructures de *n* points d'intérêt, définies chacune par un tuple d'ordre *n*, avec *n* ≥ 1 ;
c) détermination, pour chaque tuple de l'étape b), d'un vecteur de caractéristiques visuelles structurées encodant les déformations locales ainsi que les relations spatiales entre les points d'intérêt sous-jacents, ce vecteur étant formé à partir desdits descripteurs locaux de gradient et de mouvement des points d'intérêt du tuple ;
d) pour chaque tuple, mappage du vecteur déterminé à l'étape c) en un *codeword* correspondant, par application d'un algorithme de classification apte à sélectionner un *codeword* unique parmi un ensemble fini de *codewords* formant *codebook ;*
e) génération d'une série temporelle ordonnée des *codewords* déterminés à l'étape d) pour chaque tuple, pour les images successives de la séquence video ;
f) pour chaque tuple, analyse de la série temporelle de *codewords* générée à l'étape e), par mesure de similarité avec une autre série temporelle de *codewords* issue d'un autre locuteur.

La mesure de similarité de l'étape f) est avantageusement mise en oeuvre par une fonction de type *string kernel,* propre à :

f1) reconnaître des sous-séquences de *codewords* de dimension prédéterminée concordantes présentes respectivement dans la série temporelle générée et dans l'autre série temporelle, avec tolérance d'une discordance éventuelle de dimension prédéterminée, et

f2) calculer les fréquences d'occurrence desdites sous-séquences de co*dewords,*

de manière à mapper, pour chaque tuple, les séries temporelles de *codewords* en des représentations de longueur fixe de *string kernels.*

Le descripteur local de gradient est de préférence un descripteur de type histogramme des gradients orientés HOG, et le descripteur local de mouvement est un descripteur de type histogramme des flots optiques HOF. L'algorithme de classification de l'étape d) peut être un algorithme de classification non supervisée du type algorithme des *k*-moyennes.

Le procédé ci-dessus peut notamment être appliqué pour :

g) utilisation des résultats de la mesure de similarité de l'étape f) pour un apprentissage par algorithme de classification supervisée de type machine à vecteurs de supports SVM.

Selon le *second aspect* précité, l'invention propose un procédé comprenant les étapes suivantes :

a) constitution d'un ensemble de départ de microstructures de *n* points d'intérêt, définies chacune par un tuple d'ordre *n*, avec *1 ≤ n ≤ N;*
b) détermination, pour chaque tuple de l'étape a), de caractéristiques visuelles structurées associées, à partir de descripteurs locaux de gradient et/ou de mouvement des points d'intérêt du tuple ;
c) recherche et sélection itérative des tuples les plus discriminants par :

c1) application à l'ensemble des tuples d'un algorithme propre à considérer des combinaisons de tuples avec leurs caractéristiques structurées associées et détermination, pour chaque tuple de la combinaison, d'un score de pertinence correspondant ;
c2) extraction, parmi l'ensemble de tuples considérés à l'étape c1), d'un sous-ensemble de tuples produisant les scores de pertinence les plus élevés ;
c3) agrégation de tuples additionnels d'ordre 1 aux tuples du sous-ensemble extrait à l'étape c2), pour donner un nouvel ensemble de tuples d'ordre supérieur ;
c4) détermination des caractéristiques visuelles structurées associées à chaque tuple agrégé formé à l'étape c3) ;
c5) sélection, dans ledit nouvel ensemble d'ordre supérieur, d'un nouveau sous-ensemble de tuples les plus discriminants ; et
c6) réitération des étapes c1) à c5) jusqu'à un ordre *N* maximal ; et

d) exécution d'un algorithme de reconnaissance du langage visuel sur la base des tuples sélectionnés à l'étape c).

Avantageusement, l'algorithme de l'étape c1) est un algorithme de type apprentissage multi-noyaux MKL, les combinaisons de l'étape c1) sont des combinaisons linéaires de tuples, avec pour chaque tuple une pondération optimale, calculée par l'algorithme MKL, de son apport dans la combinaison, et le sous-ensemble de tuples extrait à l'étape c2) est celui des tuples présentant les pondérations les plus élevées.

Dans une première forme de mise en oeuvre du procédé ci-dessus :

- les étapes c3) à c5) mettent en oeuvre un algorithme propre à :

• évaluer la vélocité, sur une succession d'images, des points d'intérêts des tuples considérés, et
• calculer une distance entre les tuples additionnels de l'étape c3) et les tuples du sous-ensemble extrait à l'étape c2) ; et

- le sous-ensemble de tuples les plus discriminants extrait à l'étape c5) est celui des tuples vérifiant un critère de maximisation de la variance VMC.

Dans une seconde forme, alternative, de mise en oeuvre de ce procédé :

- les étapes c3) à c5) mettent en oeuvre un algorithme de type apprentissage multi-noyaux MKL, propre à :

• former des combinaisons linéaires de tuples, et
• calculer pour chaque tuple une pondération optimale de son apport dans la combinaison ; et

- le sous-ensemble de tuples les plus discriminants extrait à l'étape c5) est celui des tuples présentant les pondérations les plus élevées.

On va maintenant décrire un exemple de mise en oeuvre du dispositif de l'invention, en référence aux dessins annexés où les mêmes références numériques désignent d'une figure à l'autre des éléments identiques ou fonctionnellement semblables.

Les Figures 1 a et 1 b représentent deux images successives de la bouche d'un locuteur, montrant les variations de position des divers points d'intérêt et la déformation d'un triplet de ces points d'une image à la suivante.

La Figure 2 illustre les principales étapes de la chaine de traitement destinée à la construction préalable du vocabulaire visuel.

La Figure 3 illustre graphiquement le décodage des *codewords* par application d'un algorithme de classification, le *codebook* correspondant étant ici représenté pour les besoins de l'explication dans un espace bidimensionnel.

La Figure 4 illustre schématiquement les différentes étapes de l'analyse du langage visuel mettant en oeuvre les enseignements du premier aspect de l'invention.

La Figure 5 illustre la manière de procéder au décodage d'un tuple avec détermination des caractéristiques structurées conformément à la technique propre à l'invention, selon le premier aspect de celle-ci.

La Figure 6 illustre la production, par décodage du langage visuel, de séries temporelles de caractères visuels susceptibles de faire l'objet d'une mesure de similarité, notamment à des fins d'apprentissage et de reconnaissance.

La Figure 7 est un organigramme décrivant les principales étapes de la chaine de traitement opérant la combinaison des tuples et la sélection des structures les plus pertinentes avec mise en oeuvre de l'invention selon le second aspect de celle-ci.

La Figure 8 illustre le processus d'agrégation permettant de construire et de sélectionner des tuples d'ordre croissant, selon le second aspect de l'invention.

La Figure 9 est une représentation graphique montrant les performances de l'invention en fonction des différentes stratégies de sélection des tuples et de taille du *codebook*.

La Figure 10 illustre la distribution des ordres des tuples des caractéristiques structurées sélectionnées à la suite du processus d'agrégation selon le second aspect de la présente invention.

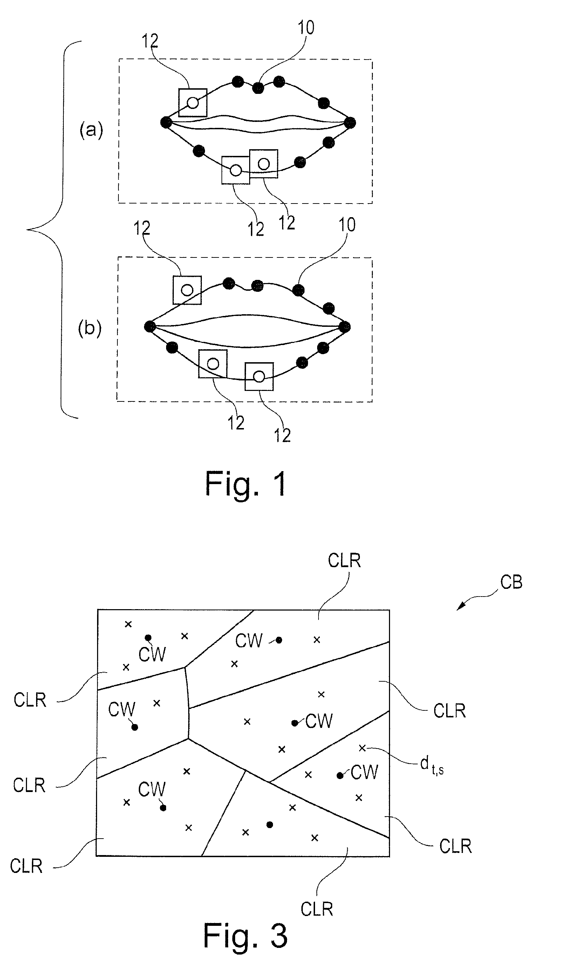

Sur la Figure 1, on a représenté deux images successives de la bouche d'un locuteur, prises dans une séquence video au cours de laquelle celui-ci articule un mot à reconnaitre, par exemple un chiffre d'un numéro de téléphone énoncé par ce locuteur.

D'une manière en elle-même connue, l'analyse du mouvement de la bouche est opérée par détection et suivi d'un certain nombre de points d'intérêt 10, dans cet exemple au nombre de douze.

*Architecture générale du procédé de l'invention*

Le suivi de ces points d'intérêt met en oeuvre des composantes d'apparence et de mouvement. Pour chaque point suivi, ces deux composantes seront caractérisées, de manière en elle-même également connue, par des histogrammes spatiaux de gradients orientés ou HOG *(Histograms of Oriented Gradient)* d'une part, et des histogrammes spatiaux de flots optiques orientés HOF *(Histograms of Oriented Optical Flow)* d'autre part dans le voisinage proche du point considéré.

Pour une description plus détaillée de ces histogrammes HOG et HOF, on pourra se référer respectivement à :

[1] N. Dalal et B. Triggs, "Histograms of Oriented Gradients for Human Détection", Computer Vision and Pattern Recognition, 2005. CVPR 2005. IEEE Computer Society Conference on. IEEE, 2005, Vol. 1, pp. 886-893, et

[2] N. Dalal, B. Triggs et C. Schmid, "Human Detection Using Oriented Histograms of Flow and Appearance", Computer Vision-ECCV 2006, pp. 428-441, 2006.

Le choix d'un descripteur HOG tient au fait que l'apparence et la forme locale d'un objet dans une image peuvent être décrites par la distribution des directions des contours les plus significatifs. L'implémentation peut être réalisée simplement en divisant l'image en des régions adjacentes de petite taille ou cellules, et en compilant pour chaque cellule l'histogramme des directions du gradient ou des orientations des contours pour les pixels à l'intérieur de cette cellule. La combinaison des histogrammes forme alors les descripteurs HOG.

Les descripteurs HOF sont formés de manière similaire à partir de l'estimation du flot optique entre deux images successives, d'une manière également connue.

Chaque point *d'intérêt* $p_{t,i}$ suivi sera ainsi décrit par un vecteur de caractéristique visuelle $f_{t,i}$ obtenu par concaténation des histogrammes HOG et HOF normalisés extraits pour ce point *i,* à l'instant *t* d'une séquence video de parole :

$$f_{t,i} = [\mathrm{HOG}_{p_{t,i}}, \mathrm{HOF}_{p_{t,i}}]$$

De façon caractéristique, selon un premier aspect de la présente invention, chaque vecteur de caractéristique visuelle de la séquence video fera l'objet d'une transformation permettant d'en simplifier l'expression tout en encodant efficacement la variabilité induite par le langage visuel, pour aboutir à une séquence ordonnée de "mots" ou *codewords* d'un vocabulaire visuel très restreint, décrivant cette séquence video. Il sera alors possible, à partir de ces séquences de *codewords,* de mesurer de façon simple la similarité de séquences entre elles, par exemple par une fonction de type *String Kernel*.

Selon un second aspect caractéristique, la présente invention propose de suivre non pas (ou pas seulement) les points d'intérêt isolés, mais des combinaisons d'un ou plusieurs de ces points, formant des microstructures dénommées "tuples", par exemple comme illustré Figure 1 un triplet 12 (tuple d'ordre 3) dont les déformations seront analysées et suivies pour permettre la reconnaissance vocale.

Cette approche présente l'avantage de combiner à la fois les caractéristiques visuelles locales (celles des points d'intérêt) et les relations spatiales entre les points du tuple considéré (c'est-à-dire la déformation de la figure formée par la paire de triplets, de quadruplets... de points d'intérêt).

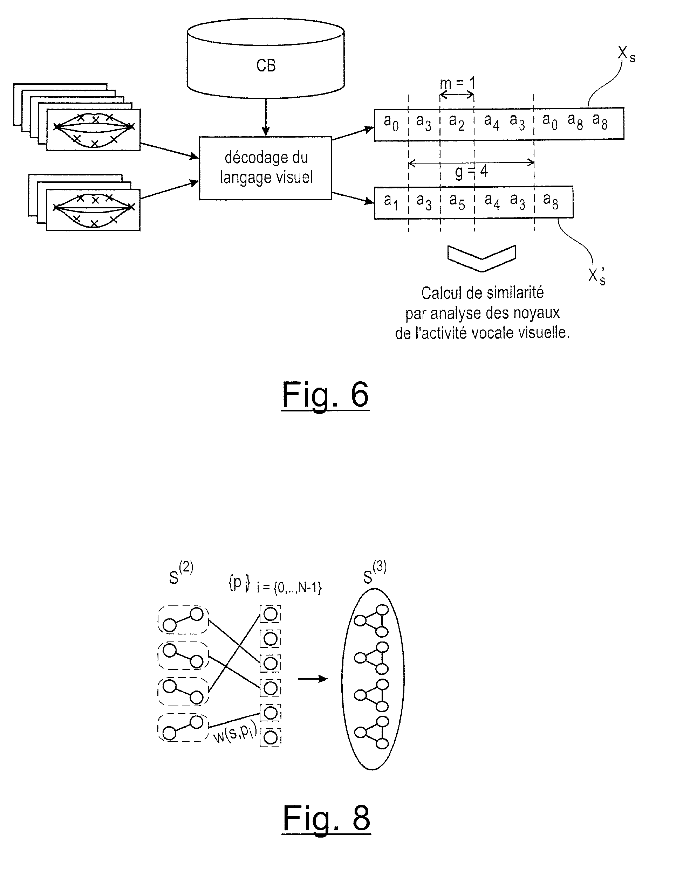

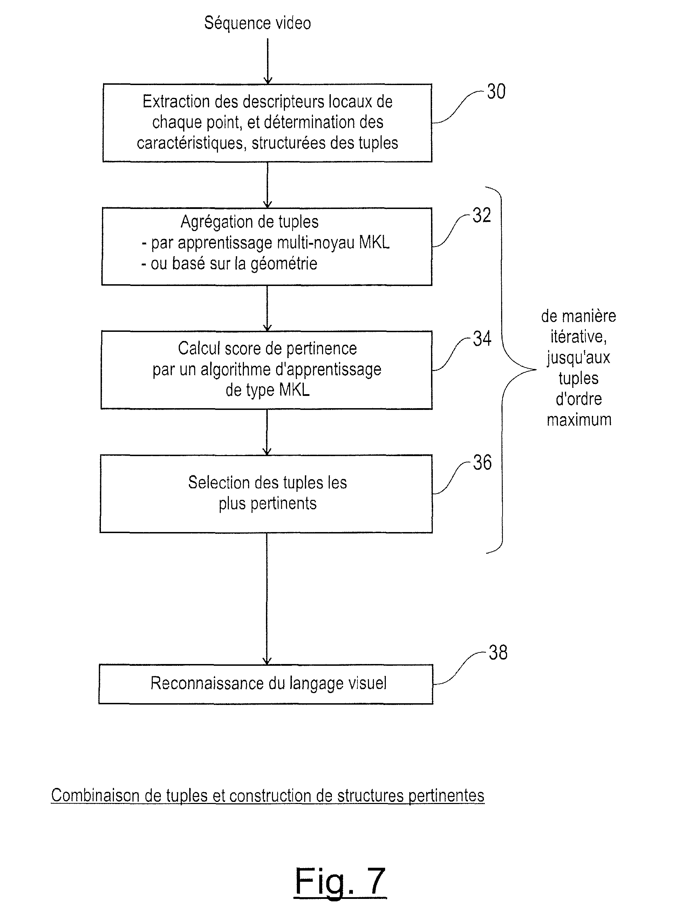

On décrira plus bas, en référence aux Figures 7 et 8, la manière de construire ces tuples et de sélectionner les plus discriminants pour l'analyse vocale visuelle.

*Construction préalable du vocabulaire visuel*

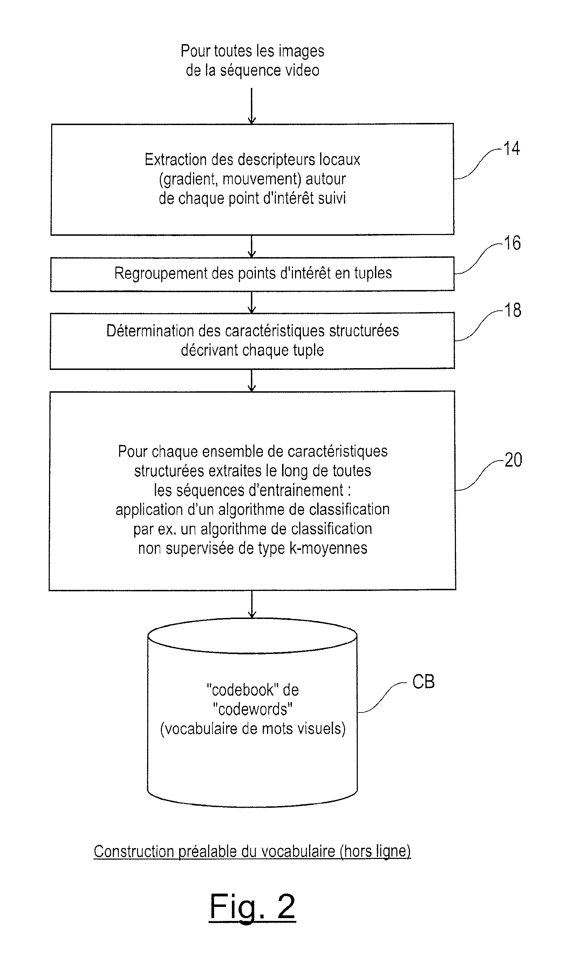

La Figure 2 illustre les principales étapes de la chaine de traitement destinée à la construction préalable du vocabulaire visuel, à partir d'une base de données d'entrainement de séquences video captées pour différents locuteurs.

La première étape consiste, pour toutes les images d'une séquence video et pour chaque point d'intérêt suivi, à extraire les descripteurs locaux de gradient et de mouvement (bloc 14) par calcul des histogrammes HOG et HOF et concaténation, de la manière indiquée plus haut.

Les points d'intérêt sont ensuite regroupés en tuples (bloc 16), et des caractéristiques structurées sont ensuite déterminées pour décrire chaque tuple de façon propre, à partir des descripteurs locaux de chaque point d'intérêt du tuple concerné.

Ces opérations sont réitérées pour toutes les séquences video de la base de données d'entrainement, et un algorithme de classification est appliqué (bloc 20), par exemple un algorithme de classification non supervisée de type $k$-moyennes permettant de définir un vocabulaire de mots visuels, qui seront désignés par la suite par leur dénomination usuelle de "code*words",* par cohérence avec la terminologie utilisée dans les différentes publications scientifiques et pour éviter toute ambigüité. Ces mots visuels constituent ensemble un vocabulaire dénommé *"codebook"* formé de K *codewords.*

La Figure 3 représente schématiquement un tel *codebook* CB, divisé en un nombre fini de *clusters* CLR caractérisés chacun par un *codeword* CW définissant le centre de chaque *cluster ;* les croix correspondent aux différents vecteurs caractéristiques $d_{s,t}$ affectés à l'indice du cluster le plus proche, et donc au *codeword* caractérisant ce cluster.

*Technique d'analyse du langage visuel selon le premier aspect de l'invention*

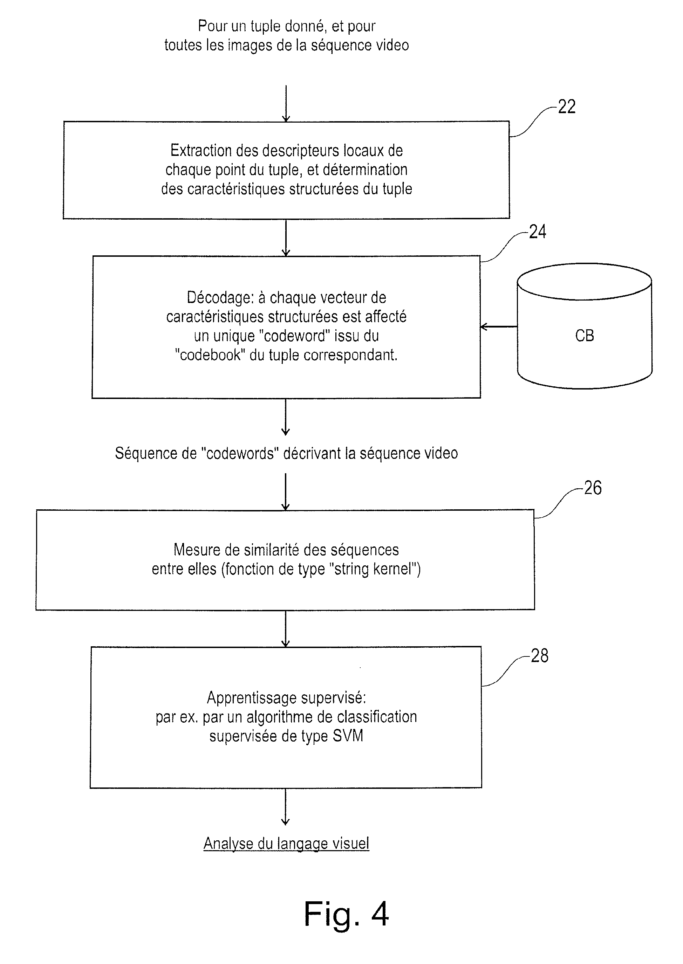

La Figure 4 illustre schématiquement les différentes étapes de l'analyse du langage visuel mettant en oeuvre les enseignements du premier aspect de l'invention.

Pour un tuple donné, et pour toutes les images de la séquence video, l'algorithme procède à l'extraction des descripteurs locaux HOG et HOF de chaque point d'intérêt du tuple, et détermine le vecteur $d_{t,s}$ de caractéristiques structurées du tuple (bloc 22). Si l'on désigne par $n$ l'ordre du tuple (par exemple $n = 3$ pour un triplet de points d'intérêt), le vecteur de description du tuple $s$ est formé par la concaténation des $n$ vecteurs de descripteurs locaux $f_{t,i} = [\text{HOG}_{p_{t,i}}, \text{HOF}_{p_{t,i}}]$, soit $d_{t,s} = [f_{t,i}]_{i \in s}$ (pour un triplet de points d'intérêt, le vecteur de description est donc une concaténation de trois vecteurs $f_{t,i}$)

Il est important de noter que, par construction, chaque vecteur caractéristique $d_{t,s}$ encode aussi bien les caractéristiques visuelles locales (c'est-à-dire celles de chacun des points d'intérêt) que les relations spatiales entre les points du visage (donc celles propres au tuple en tant que tel).

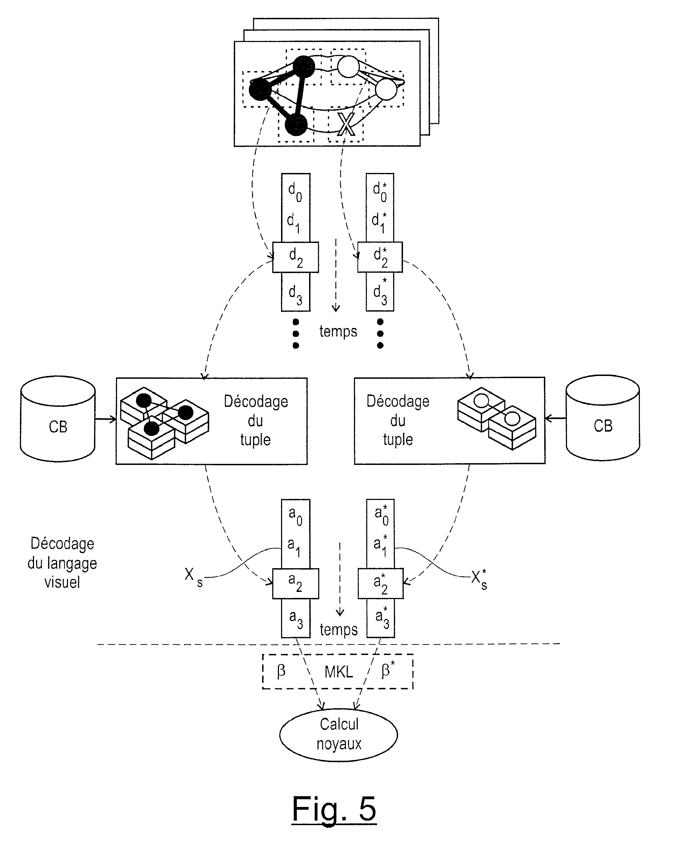

L'étape suivante est une étape de décodage (bloc 24), qui sera décrite plus en détail notamment en relation avec la Figure 5.

Essentiellement, pour un tuple $s$ de l'ensemble des tuples, on considère l'union $D_s$ de tous les vecteurs de caractéristiques structurées extraits de différentes trames des séquences video d'entrainement aux indices d'emplacement $s$. Afin d'associer un unique *codeword* à un vecteur caractéristique $d_{t,s}$, l'algorithme partitionne $D_s$ en $k$ partitions ou *clusters* (au sens de la technique de partitionnement de données ou *data clustering* en tant que méthode statistique d'analyse des données).

On peut notamment utiliser à cet effet un algorithme de classification non supervisée de type algorithme des $k$-moyennes, qui consiste à rechercher dans un espace de données des partitions regroupant dans une même classe les points voisins (au sens d'une distance euclidienne), de sorte que chaque donnée appartienne au *cluster* présentant la moyenne la plus proche. Les détails de cette technique d'analyse pourront être trouvés notamment dans :

[3] S. P. Lloyd "Least squares quantization in PCM", IEEE Transactions on Information Theory, 28 (2): 129-137, 1982.

Le vecteur $d_{t,s}$ est ensuite affecté à l'indice du *cluster* le plus proche, comme illustré schématiquement sur la Figure 3 décrite plus haut, qui représente schématiquement le *codebook* CB, divisé en un nombre fini de *clusters* CLR caractérisés chacun par un *codeword* CW. Le décodage consiste à affecter chaque vecteur caractéristique $d_{t,s}$ à l'indice du *cluster* CLR le plus proche, et donc au *codeword* CW caractérisant ce *cluster.*

Le résultat du décodage de l'étape 24, appliqué à toutes les images de la séquence video, produit une séquence ordonnée de *codewords,* notée $X_s$, décrivant cette séquence video.

Il sera alors possible, à partir de ces séquences de *codewords,* d'effectuer de façon simple une mesure de similarité des séquences entre elles (bloc 26), par exemple par une fonction de type *string kernel* de la manière qui sera explicitée plus bas en relation avec la Figure 6.

L'application de cette technique à toutes les séquences video d'entrainement (bloc 28) pourra être utilisée pour la mise en oeuvre d'un apprentissage supervisé, par exemple à l'aide d'un algorithme de classification supervisé de type machine à vecteurs de supports SVM *(Support Vector Machine).*

Pour une description plus détaillée de ces algorithmes SVM, on pourra se référer notamment à :

[4] H. Drucker, C.J.C. Burges, L. Kaufman, A. Smola et V. Vapnik "Support Vector Regression Machines", Advances in Neural Information Processing Systems 9, pages 155-161, MIT Press, 1997.

La Figure 5 illustre plus précisément la manière de procéder au décodage de l'étape 24, avec détermination pour chaque tuple des caractéristiques structurées par la technique propre à l'invention, selon le premier aspect de celle-ci.

Cette opération de décodage du langage visuel est exécutée successivement pour chaque image de la séquence video, et pour chaque tuple de chaque image. Sur la Figure 5 on a illustré un tel décodage effectué pour deux tuples de l'image (un triplet et une paire) mais bien entendu ce décodage est opéré pour tous les ordres de tuples, de manière à donner pour chacun une séquence correspondante $X_s$ de *codewords.*

Les descripteurs locaux $f_{t,i}$ de chaque point d'intérêt de chaque tuple sont calculés de la manière indiquée plus haut (à partir des histogrammes HOG et HOF), puis concaténés pour donner le *descripteur* $d_t$ de chaque tuple, de manière à produire un vecteur de caractéristiques visuelles structurées correspondant. On obtient ainsi une séquence de vecteurs $d_{t,s}$ de grande dimension décrivant la morphologie du tuple *s* et ses déformations au fil des images successives de la séquence video.

Chaque tuple est ensuite traité par un décodeur de tuple permettant de mapper le vecteur $d_{t,s}$ de grande dimension de l'image considérée en un *codeword* unique correspondant appartenant à l'ensemble fini de *codewords* du *codebook* CB.

Le résultat est une séquence temporelle de *codewords* $a_0$ ... $a_3$ ... homologue de la séquence $d_0$ ... $d_3$ ... des vecteurs de caractéristiques visuelles relatifs à la même séquence. Ces séquences temporelles simplifiées $a_0$ ... $a_3$ ... sont de simples séries d'entiers, chaque élément de la série étant simplement l'indice *a* du *cluster* identifiant le *codeword* dans le *codebook.* Par exemple, avec un *codebook* de 10 *codewords* l'indice *a* peut être représenté par un simple chiffre compris entre 0 et 9 et avec un *codebook* de 256 *codewords,* par un simple octet.

L'étape suivante consistera à appliquer aux tuples un algorithme de type apprentissage multi-noyaux MKL *(Multiple Kernel Learning),* consistant à établir une combinaison linéaire de plusieurs tuples avec attribution à chacun d'un poids respectif $\beta$. Pour une description plus détaillée de ces algorithmes MKL, on pourra se référer notamment à :

[5] A. Zien et C.S. Hong, "Multiclass Multiple Kernel Learning", Proceedings of the 24th International Conference on Machine Learning, ACM, 2007, pp. 1191-1198.

Plus précisément, la Figure 6 illustre l'utilisation des séries temporelles de caractères visuels obtenues par le décodage du langage visuel que l'on vient d'exposer, pour une mesure de similarité entre séquences, notamment à des fins d'apprentissage et de reconnaissance.

Selon un aspect caractéristique de l'invention, il est proposé d'adapter et d'appliquer le mécanisme des fonctions de type *string kernel* pour mesurer la similarité entre ces séquences de langage visuel et encoder le dynamisme inhérent à la parole continue.

Pour une étude plus approfondie de ces fonctions *string kernel,* on pourra se référer notamment à :

[6] C. Leslie, E. Eskin et W.S. Noble, "The Spectrum Kernel : A String Kernel for SVM Protein Classification", Proceedings of the Pacific Symposium on Biocomputing, Hawaii, USA, 2002, Vol. 7, pp. 566-575, et

[7] S.V.N. Vishwanathan and A.J. Smola, "Fast Kernels for String and Tree Matching", Kernel Methods in Computational Biology, pp. 113-130, 2004.

Le décodage d'une séquence d'images video, opérée de la manière décrite Figure 5, produit une séquence temporelle de *codewords* $X_s$ pour chaque tuple *s* de l'ensemble de tuples suivis dans l'image.

Le principe consiste à construire une fonction de mappage permettant la comparaison non pas de la fréquence des *codewords* représentant la séquence visuelle, mais la fréquence de sous-séquences communes de longueur g (recherche de *g codewords* adjacents du même *codebook),* afin de ne pas perdre l'information spatiale de la séquence. On peut ainsi conserver la cohérence temporelle de la parole continue. On tolèrera dans les sous-séquences une discordance éventuelle de dimension *m*.

Par exemple, dans l'exemple de la Figure 6, on peut observer entre les séquences $X_s$ et $X'_s$ de *codewords* une sous-séquence de g = 4 caractères adjacents, avec une discordance de *m* = 1 caractère.

L'algorithme détermine la fréquence d'occurrence des sous-séquences communes aux deux séquences $X_s$ et $X'_s$ de *codewords,* donnant un ensemble de mesure comptabilisant l'ensemble de toutes les séquences de longueur *g* qui diffèrent entre elles d'au maximum *m* caractères. Pour chaque tuple, on peut ainsi mapper les séries temporelles de *codewords* en des représentations de longueur fixe de *string kernels,* cette fonction de mappage permettant ainsi de résoudre le problème de classification de séquences de taille variable du langage visuel.

*Technique de construction et de sélection des tuples selon le second aspect de l'invention*

La Figure 7 est un organigramme décrivant les principales étapes de la chaine de traitement opérant la combinaison des tuples et la sélection des structures les plus pertinentes, selon le second aspect de l'invention.

La première étape consiste à extraire les descripteurs locaux de chaque point, et déterminer les caractéristiques structurées des tuples (bloc 30, similaire au bloc 22 décrit pour la Figure 4).

L'étape suivante, caractéristique de l'invention selon son second aspect, consiste à construire des tuples à partir de singletons et par agrégation progressive (bloc 32). On verra que cette agrégation peut être réalisée selon deux stratégies possibles différentes reposant i) sur un principe commun d'agrégation et ii) soit sur un critère géométrique, soit sur une procédure d'apprentissage multi-noyaux MKL.

Pour caractériser la variabilité du mouvement des lèvres, due à différentes articulations et aux différentes classes de la parole visuelle, il est proposé d'effectuer une sélection en observant les statistiques de vélocité des points d'intérêt du visage autour des lèvres. Ce procédé de sélection commence par l'ordre le plus petit (c'est-à-dire, parmi l'ensemble des tuples, les singletons) et suit une "approche gloutonne" *(greedy algorithm)* incrémentale pour constituer de nouveaux tuples d'ordre supérieur en agrégeant un tuple supplémentaire aux tuples de la sélection courante de tuples, et en opérant une nouvelle sélection sur la base d'un calcul de score de pertinence (bloc 34), par exemple par un critère de maximisation de la variance VMC comme on le décrira plus bas notamment en relation avec la Figure 8.

Les tuples les plus pertinents sont ainsi sélectionnés (bloc 36) de manière itérative. Une fois atteint l'ordre maximum (par exemple l'ordre 4 qu'on considère comme une limite supérieure de taille d'un tuple), on considèrera qu'il suffit d'utiliser les tuples ainsi sélectionnés, et non la totalité des tuples possibles, pour toute opération de reconnaissance du langage visuel (bloc 38).

La Figure 8 illustre le processus d'agrégation que l'on vient d'évoquer, dans une phase où l'on ajoute un singleton aux paires qui ont été déjà sélectionnées pour constituer un ensemble de triplets et sélectionner dans ces triplets les plus pertinents parmi l'ensemble des tuples déjà constitué (singletons, paires et triplets), etc.

Dans le cas d'une agrégation de tuples basée sur une stratégie géométrique, la sélection des tuples les plus pertinents est avantageusement réalisée par une stratégie VMC *(Variance Maximization Criterion),* consistant à calculer une distance, telle qu'une distance de Hausdorff, sur différentes images d'une séquence video, entre i) les points d'intérêt reliés aux tuples de la sélection $S^{(n)}$ et ii) les points d'intérêt des singletons de l'ensemble $S^{(1)}$, en sélectionnant les tuples de $S^{(n+1)}$ produisant la meilleure affectation entre les tuples de $S^{(n)}$ et les tuples de $S^{(1)}$, cette sélection étant exécutée par exemple par application d'un algorithme de Kuhn-Munkres ou "algorithme hongrois". Cette procédure de sélection est répétée pour des valeurs de *n* croissantes (en pratique, *n* = 1 ... 4) et à la fin de la procédure, on ne conserve pour effectuer la reconnaissance du langage visuel que les tuples présentant les variances les plus élevées.

En variante, l'agrégation de tuples peut être non plus basée sur la géométrie mais assistée par un algorithme de type apprentissage multi-noyaux MKL *(Multiple Kernel Learning),* avec combinaison linéaire de plusieurs tuples avec attribution à chacun d'un poids *β* (on pourra se référer à l'article [5] précité pour plus de détails sur ces algorithmes MKL). L'apprentissage commence par une combinaison linéaire de singletons élémentaires, l'algorithme sélectionnant ensuite les singletons ayant obtenu les poids MKL les plus élevés. Cette procédure est répétée pour des valeurs de *n* croissantes, en utilisant les noyaux (donc les tuples) sélectionnés à l'itération précédente et en effectuant la combinaison linéaire de ces noyaux avec les noyaux élémentaires associés aux tuples de $S^{(n)}$. Ici encore, ne sont conservés que les tuples ayant obtenu les poids MKL les plus élevés. À la dernière étape de cette procédure, la combinaison linéaire de noyaux obtenue correspond à un ensemble de tuples discriminants, d'ordres différents.

*Performances obtenues par l'approche selon l'invention*

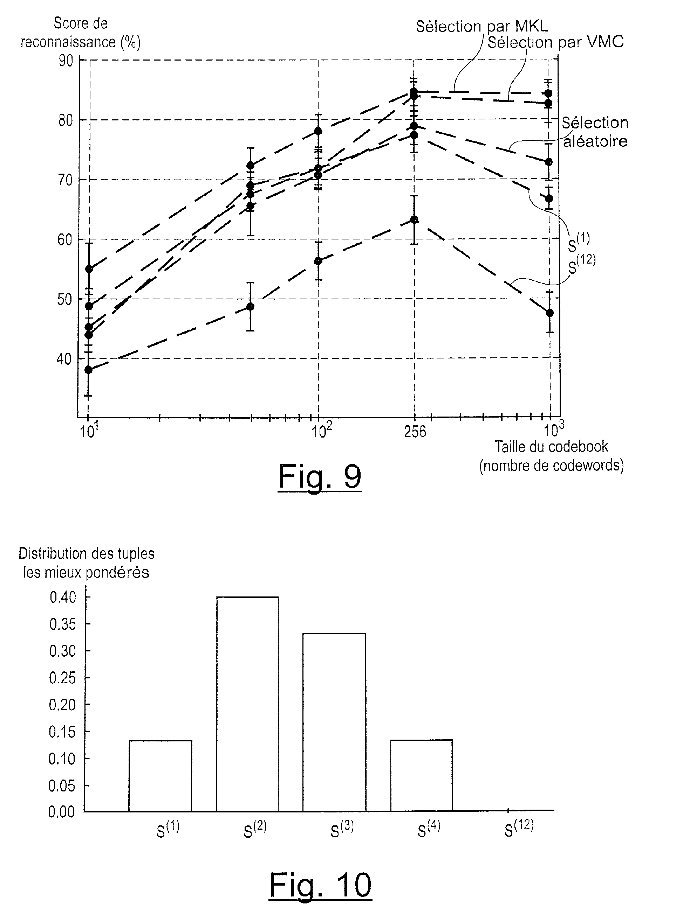

La Figure 9 illustre les performances de l'invention en fonction de différentes stratégies de sélection des tuples et de taille du *codebook :*

- pour une sélection de tuples selon une stratégie mettant en oeuvre un algorithme de type apprentissage multi-noyaux MKL appliqué à des combinaisons linéaires de tuples ("Sélection par MKL") ;
- pour une sélection de tuples selon une stratégie géométrique basée sur un critère de maximisation de la variance VMC ("Sélection par VMC") ;
- pour une sélection de 30 tuples choisis au hasard ("Sélection aléatoire") ;
- avec utilisation exclusive des seuls tuples d'ordre 1 ($S^{(1)}$"), c'est-à-dire à partir des seuls points d'intérêt, sans combiner ceux-ci en paires, triplets ni quadruplets, etc. ;
- avec une unique structure constituée des douze points d'intérêt, c'est-à-dire un unique tuple d'ordre 12 ("$S^{(12)}$"), ce qui correspond à une analyse globale des points d'intérêt considérés comme un seul ensemble en eux-mêmes.

Les résultats sont donnés en fonction de la taille du *codebook,* et l'on voit que les performances optimales sont atteintes pour un *codebook* de 256 *codewords,* et que ces résultats sont notablement supérieurs à une sélection arbitraire des tuples, à une analyse des seuls points d'intérêt ou à un noyau unique correspondant à une simple concaténation des descripteurs de tous les points d'intérêt.

Enfin, la Figure 10 montre la distribution en fonction de leur ordre $n$ des tuples $S^{(n)}$ conservés à la fin de la procédure de sélection des tuples les plus pertinents. On peut voir que cette distribution, qui dans l'exemple illustré correspond aux vingt tuples sélectionnés ayant obtenu les meilleurs poids $\beta$ attribués par la pondération MKL, est fortement centrée autour des ordres $n = 2$ et 3. Ceci montre clairement que les caractéristiques structurées les plus discriminantes correspondent aux tuples de $S^{(2)}$ et $S^{(3)}$, c'est-à-dire aux paires et aux triplets de points d'intérêt.

**Revendications**

1. Un procédé de reconnaissance automatique du langage par analyse de l'activité vocale visuelle d'une séquence video comprenant une succession d'images de la région de la bouche d'un locuteur, par suivi des déformations locales d'un ensemble de points d'intérêt prédéterminés sélectionnés sur cette région de la bouche du locuteur, procédé **caractérisé en ce qu'**il comprend les étapes suivantes :

a) pour chaque point d'intérêt (10) de chaque image, calcul (22) :

• d'un descripteur local de gradient, fonction d'une estimation de la distribution des gradients orientés, et
• d'un descripteur local de mouvement, fonction d'une estimation des flots optiques orientés entre images successives,

lesdits descripteurs étant calculés entre images successives dans le voisinage du point d'intérêt considéré ;
b) constitution (22) de microstructures de $n$ points d'intérêt, définies chacune par un tuple d'ordre $n$, avec $n \geq 1$ ;
c) détermination (22), pour chaque tuple de l'étape b), d'un vecteur de caractéristiques visuelles structurées encodant les déformations locales ainsi que les relations spatiales entre les points d'intérêt sous-jacents, ce vecteur étant formé à partir desdits descripteurs locaux de gradient et de mouvement des points d'intérêt du tuple ;
d) pour chaque tuple, mappage (24) du vecteur déterminé à l'étape c) en un *codeword* correspondant, par application d'un algorithme de classification apte à sélectionner un *codeword* unique parmi un ensemble fini de *codewords* (CW) formant *codebook* (CB) ;
e) génération d'une série temporelle ordonnée $(a_0 \ldots a_3 \ldots)$ des *codewords* déterminés à l'étape d) pour chaque tuple, pour les images successives de la séquence video ;

f) pour chaque tuple, analyse de la série temporelle de *codewords* générée à l'étape e), par mesure de similarité (26) avec une autre série temporelle de *codewords* issue d'un autre locuteur.

2. Le procédé de la revendication 1, dans lequel la mesure de similarité de l'étape f) est mise en oeuvre par une fonction de type *string kernel,* propre à :

f1) reconnaitre des sous-séquences de *codewords* de dimension prédéterminée (g) concordantes présentes respectivement dans la série temporelle générée $(X_s)$ et dans l'autre série temporelle $(X'_s)$, avec tolérance d'une discordance éventuelle de dimension prédéterminée (m), et
f2) calculer les fréquences d'occurrence desdites sous-séquences de *codewords,*

de manière à mapper, pour chaque tuple, les séries temporelles de code*words* en des représentations de longueur fixe de *string kernels.*

3. Le procédé de la revendication 1, dans lequel le descripteur local de gradient est un descripteur de type histogramme des gradients orientés HOG.

4. Le procédé de la revendication 1, dans lequel le descripteur local de mouvement est un descripteur de type histogramme des flots optiques HOF.

5. Le procédé de la revendication 1, dans lequel l'algorithme de classification de l'étape d) est un algorithme de classification non supervisée du type algorithme des $k$-moyennes.

6. Le procédé de la revendication 1, comprenant en outre une étape de :

g) utilisation des résultats de la mesure de similarité de l'étape f) pour un apprentissage (28) par algorithme de classification supervisée de type machine à vecteurs de supports SVM.

Fig. 1

Fig. 3

Pour toutes les images
de la séquence video

Extraction des descripteurs locaux
(gradient, mouvement) autour
de chaque point d'intérêt suivi

`~14`

Regroupement des points d'intérêt en tuples

`~16`

Détermination des caractéristiques structurées
décrivant chaque tuple

`~18`

Pour chaque ensemble de caractéristiques
structurées extraites le long de toutes
les séquences d'entrainement :
application d'un algorithme de classification
par ex. un algorithme de classification
non supervisée de type k-moyennes

`~20`

"codebook" de
"codewords"
(vocabulaire de mots visuels)

`CB`

Construction préalable du vocabulaire (hors ligne)

# Fig. 2

Pour un tuple donné, et pour
toutes les images de la séquence video

Extraction des descripteurs locaux de
chaque point du tuple, et détermination
des caractéristiques structurées du tuple

— 22

Décodage: à chaque vecteur de
caractéristiques structurées est affecté
un unique "codeword" issu du
"codebook" du tuple correspondant.

— 24

CB

Séquence de "codewords" décrivant la séquence video

Mesure de similarité des séquences
entre elles (fonction de type "string kernel")

— 26

Apprentissage supervisé:
par ex. par un algorithme de classification
supervisée de type SVM

— 28

Analyse du langage visuel

# Fig. 4

$$d_0 \quad d_0^*$$
$$d_1 \quad d_1^*$$
$$d_2 \quad d_2^*$$
$$d_3 \quad d_3^*$$

temps

CB    Décodage du tuple    Décodage du tuple    CB

Décodage du langage visuel

$$a_0 \quad a_0^*$$
$$a_1 \quad a_1^*$$
$$X_s \quad a_2 \qquad a_2^* \quad X_s^*$$
$$a_3 \quad a_3^*$$

temps

$$\beta \quad MKL \quad \beta^*$$

Calcul noyaux

# Fig. 5

Calcul de similarité
par analyse des noyaux
de l'activité vocale visuelle.

## Fig. 6

## Fig. 8

Séquence video

┌─────────────────────────────────────────┐
│ Extraction des descripteurs locaux de    │  30
│ chaque point, et détermination des       │
│ caractéristiques, structurées des tuples │
└─────────────────────────────────────────┘

┌─────────────────────────────────────────┐
│ Agrégation de tuples                     │  32
│ - par apprentissage multi-noyau MKL      │
│ - ou basé sur la géométrie               │
└─────────────────────────────────────────┘

┌─────────────────────────────────────────┐
│ Calcul score de pertinence               │  34
│ par un algorithme d'apprentissage        │
│ de type MKL                              │
└─────────────────────────────────────────┘

┌─────────────────────────────────────────┐
│ Selection des tuples les                 │  36
│ plus pertinents                          │
└─────────────────────────────────────────┘

de manière itérative, jusqu'aux tuples d'ordre maximum

┌─────────────────────────────────────────┐
│ Reconnaissance du langage visuel         │  38
└─────────────────────────────────────────┘

Combinaison de tuples et construction de structures pertinentes

# Fig. 7

Fig. 9

Fig. 10

Europäisches
Patentamt

European
Patent Office

Office européen
des brevets

**RAPPORT DE RECHERCHE EUROPEENNE**

Numéro de la demande

EP 14 16 7786

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JEONGWOO JU ET AL: "Speaker Dependent Visual Speech Recognition by Symbol and Real Value Assignment", 16 décembre 2012 (2012-12-16), ROBOT INTELLIGENCE TECHNOLOGY AND APPLICATIONS 2012 ADVANCES IN INTELLIGENT SYSTEMS AND COMPUTING, SPRINGER, DE, PAGE(S) 1015 - 1022, XP008165165, ISBN: 978-3-642-37373-2 * Sections 1 a 4 * | 1-6 | INV. G10L15/25 G06K9/00 |
| A | NAVNEET DALAL ET AL: "Human Detection Using Oriented Histograms of Flow and Appearance", 1 janvier 2006 (2006-01-01), COMPUTER VISION - ECCV 2006 LECTURE NOTES IN COMPUTER SCIENCE;;LNCS, SPRINGER, BERLIN, DE, PAGE(S) 428 - 441, XP019036457, ISBN: 978-3-540-33834-5 * Section 5 * | 1-6 | |
| A | SIVIC ET AL: "Video Google: a text retrieval approach to object matching in videos", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 octobre 2003 (2003-10-13), page 1470, XP031213216, ISBN: 978-0-7695-1950-0 * Section 6.2 * | 1-6 | DOMAINES TECHNIQUES RECHERCHES (IPC) G10L G06K |

-/--

Le présent rapport a été établi pour toutes les revendications

| Lieu de la recherche | Date d'achèvement de la recherche | Examinateur |
|---|---|---|
| La Haye | 17 septembre 2014 | Thean, Andrew |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches Patentamt
European Patent Office
Office européen des brevets

## RAPPORT DE RECHERCHE EUROPEENNE

Numéro de la demande

EP 14 16 7786

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | QING-FANG ZHENG ET AL: "Effective and efficient object-based image retrieval using visual phrases", PROCEEDINGS OF THE 14TH ANNUAL ACM INTERNATIONAL CONFERENCE ON MULTIMEDIA , MULTIMEDIA '06, 1 janvier 2006 (2006-01-01), page 77, XP055076462, New York, New York, USA DOI: 10.1145/1180639.1180664 ISBN: 978-1-59-593447-5 * Section 2.2 et 2.3 * | 1-6 | |
| A | ERIC ZAVESKY: "LipActs: Efficient representations for visual speakers", MULTIMEDIA AND EXPO (ICME), 2011 IEEE INTERNATIONAL CONFERENCE ON, IEEE, 11 juillet 2011 (2011-07-11), pages 1-4, XP031964780, DOI: 10.1109/ICME.2011.6012102 ISBN: 978-1-61284-348-3 * Section 1 a 3 * | 1-6 | |
| A | BANGPENG YAO ET AL: "Grouplet: A structured image representation for recognizing human and object interactions", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 juin 2010 (2010-06-13), pages 9-16, XP031726059, ISBN: 978-1-4244-6984-0 * Sections 1, 3 et 4 * | 1-6 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 17 septembre 2014 | Thean, Andrew |

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Speaker Dependent Visual Speech Recognition by Symbol and Rear Value Assignment. **JU et al.** Robot Intelligence Technology and Applications 2012 Advances in Intelligent Systems and Computing. Springer, Janvier 2013, 1015-1022
- Human Detection Using Oriented Histograms of Flow and Appearance. **NAVNEET et al.** Proceedings of the European Conference on Computer Vision. Springer, Mai 2006, 428-441
- **SIVIC et al.** Video Google: A Text Retrieval Approach to Object Matching in Videos. *Proceedings of the 8th IEEE International Conference on Computer Vision,* Octobre 2003, 1470-1477
- **ZHENG et al.** Effective and efficient Object-based Image Retrieval Using Visual Phrases. *Proceedings of the 14th Annual ACM International Conference on Multimedia,* Janvier 2006, 77-80
- **ZAVESKY.** LipActs: Efficient Representations for Visual Speakers. *IEEE International Conference on Multimedia and Expo,* Juillet 2011, 1-4
- **YAO et al.** Grouplet: A structured image Representation for Recognising Human and Object Interactions. *2010 IEEE Conference on Computer Vision and Pattern Recognition,* Juin 2010, 9-16
- **ZHANG et al.** Generating Descriptive Visual Words and Visual Phrases for Large-Scale Image Applications. *IEEE Transactions on Image Processing,* Septembre 2011, vol. 20 (9), 2664-2667
- **ZHENG et al.** Visual Synset: Towards a Higher-Level Visual representation. *IEEE Conference on Computer Vision and Pattern Recognition,* Juin 2008, 9-16

- **N. DALAL ; B. TRIGGS.** Histograms of Oriented Gradients for Human Détection. *Computer Vision and Pattern Recognition, 2005. CVPR 2005. IEEE Computer Society Conference on. IEEE,* 2005, vol. 1, 886-893
- **N. DALAL ; B. TRIGGS ; C. SCHMID.** Human Detection Using Oriented Histograms of Flow and Appearance. *Computer Vision-ECCV 2006,* 2006, 428-441
- **S. P. LLOYD.** Least squares quantization in PCM. *IEEE Transactions on Information Theory,* 1982, vol. 28 (2), 129-137
- Support Vector Regression Machines. **H. DRUCKER ; C.J.C. BURGES ; L. KAUFMAN ; A. SMOLA ; V. VAPNIK.** Advances in Neural Information Processing Systems. MIT Press, 1997, vol. 9, 155-161
- Multiclass Multiple Kernel Learning. **A. ZIEN ; C.S. HONG.** Proceedings of the 24th International Conference on Machine Learning. ACM, 2007, 1191-1198
- **C. LESLIE ; E. ESKIN ; W.S. NOBLE.** The Spectrum Kernel : A String Kernel for SVM Protein Classification. *Proceedings of the Pacific Symposium on Biocomputing,* 2002, vol. 7, 566-575
- **S.V.N. VISHWANATHAN ; A.J. SMOLA.** Fast Kernels for String and Tree Matching. *Kernel Methods in Computational Biology,* 2004, 113-130